# EUROPEAN PATENT APPLICATION

(11) **EP 1 813 379 A1**
(43) Date of publication of application: **01.08.2007**
(21) Application number: 07001013.7
(22) Date of filing: 18.01.2007
(51) Int. Cl.: B23K 26/08, B23K 26/38

(54) **Laser processing method**

(30) Priority: 25.01.2006 JP 2006016477
(71) Applicant: FANUC LTD, Minamitsuru-gun, Yamanashi 401-0597 (JP)
(72) Inventor: Miyajima, Keiichiro FANUC Manshonharimomi, R.7-106, Minamitsuru-gun Yamanashi 401-0511 (JP); Fujiwara, Kohji FANUC Dai3virakaramatsu, R.N-210, Minamitsuru-gun Yamanashi 401-0511 (JP)
(74) Representative: Thum, Bernhard

(57) **Abstract**

A laser processing method for cutting, by laser beam, a cutting path (A0) of a workpiece having a corner (B) between a first cutting path (A1) and a second cutting path (A2) is provided. The workpiece is cut under the first cutting conditions (X) from the first cutting path to the corner, and under the second cutting conditions smaller in cutting ability than the first cutting conditions for a predetermined section (A21) on the second cutting path from the corner. The workpiece is cut under the first cutting conditions on the second cutting path after finished the predetermined section. The cutting conditions are continuously changed at the time of switching from the first cutting conditions to the second cutting conditions and/or from the second cutting conditions to the first cutting conditions. In this way, a processing defect is prevented while suppressing the delay of the cutting time at the time of cutting along the cutting path including the corner.

## Description

### BACKGROUND OF THE INVENTION

### 1. Field of the Invention

This invention relates to a laser processing method for cutting a cutting path, including a corner, on a workpiece such as a steel plate by laser beam.

### 2. Description of the Related Art

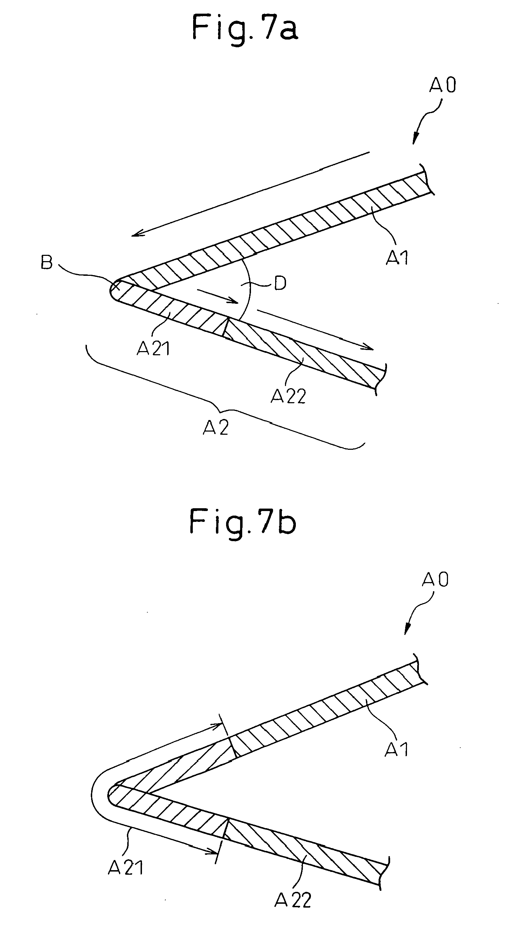

In the prior art, a workpiece such as a steel plate is cut along a cutting path, including a corner, by laser processing. Fig. 7a is a schematic diagram showing a generally example of a cutting path including a corner. The cutting path A0 shown in Fig. 7a includes a sharp corner B between a first cutting path A1 and a second cutting path A2. Normally, the processing speed is reduced when passing through the corner B. In the case where the laser output is maintained constant, therefore, excessive heat is accumulated and the cutting width may be enlarged or a burn-through may occur at the corner B.

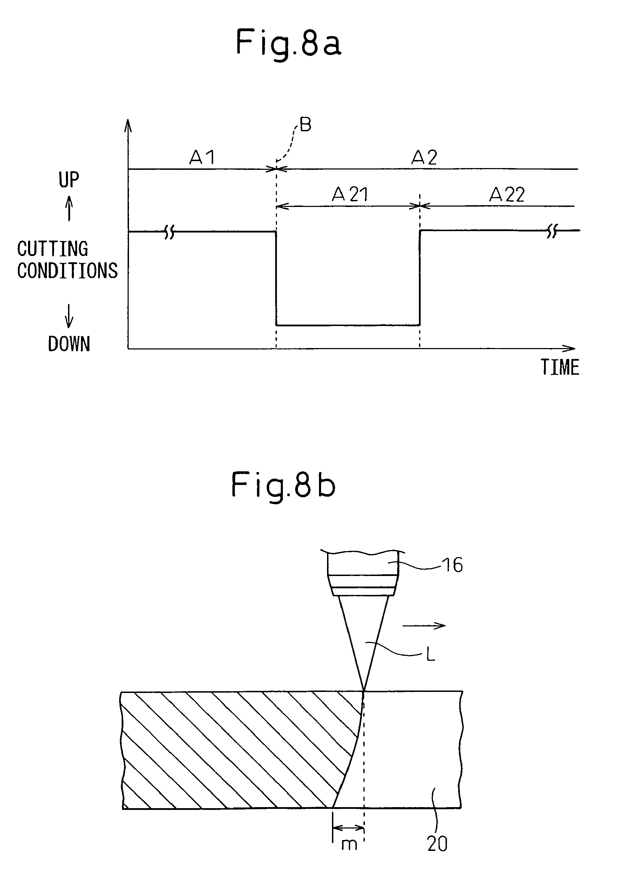

For this reason, according to the Patent Publication No. 3211902, different cutting conditions are employed for the first cutting path A1 extending to the corner B and the second cutting path A2 extending from the corner B. Specifically, as shown in Fig. 8a showing the relation between the cutting conditions and time according to the prior art, the cutting conditions for a minor section A21 of the second cutting path A2 extending from the corner B are downgraded as compared with the normal cutting conditions for the first cutting path A1 extending to the corner B. After finishing the minor section A21, the cutting conditions for the section A22 are upgraded again to the normal cutting conditions. By doing so, the method disclosed in Patent Publication No. 3211902 suppresses the enlargement of the cutting width or the occurrence of the burn-through at the corner B.

In the prior art as shown in Fig. 8a, however, the cutting conditions are changed in steps. Especially when restoring the cutting conditions to the normal cutting conditions between the minor section A21 and the remaining section A22, a processing defect, such as incompleteness, may occur on the workpiece 20. This is caused by the fact that, as can be seen from Fig. 8b showing the processing section at the time of cutting with laser beam, the cutting delay m occurs behind the position of radiation of the laser beam L on the workpiece 20 at the time of changing the cutting conditions, resulting in an abnormal burning. Especially in the case where the thickness of the workpiece 20 is comparatively large, the cutting delay m is correspondingly increased and the aforementioned processing defect is liable to occur.

A technique for preventing this cutting delay m is disclosed in the Patent Publication No. 3175463. Specifically, according to the Patent Publication No. 3175463, the laser radiation is suspended between the minor section A21 and the remaining section A22, and after retreating the laser processing head 16 by a predetermined distance along the minor section A21, the laser processing head 16 is advanced while radiating the laser beam L in the state the cutting conditions are restored to the normal cutting conditions. In this case, even in the case where the cutting delay m occurs, the occurrence of a processing defect can be avoided by the cutting process under the normal cutting conditions.

In the laser processing method disclosed in Patent Publication No. 3175463, however, the laser processing head 16 is required to be moved by a predetermined distance with the radiation of laser beam L suspended, and therefore, the problem is posed that the cutting time is delayed.

This invention has been developed in view of this situation, and the object thereof is to provide a laser processing method in which a cutting defect is prevented when cutting a cutting path including a corner, while suppressing an increase in the cutting time.

### SUMMARY OF THE INVENTION

In order to achieve the aforementioned object, according to a first aspect of the invention, there is provided a laser processing method for cutting a cutting path of a workpiece having a corner between a first cutting path and a second cutting path, comprising the steps of cutting the workpiece under the first cutting conditions from the first cutting path to the corner, cutting the workpiece under the second cutting conditions smaller in cutting ability than the first cutting conditions for a predetermined section on the second cutting path from the corner, and cutting the workpiece under the first cutting conditions on the second cutting path after finishing the predetermined section, wherein at the time of switching from the first cutting conditions to the second cutting conditions and/or switching from the second cutting conditions to the first cutting conditions, the cutting conditions are continuously changed.

According to a second aspect of the invention, there is provided a laser processing method for cutting, by laser beam, a cutting path of a workpiece having a corner section containing a corner between a first cutting path and a second cutting path, comprising the steps of cutting the workpiece under the first cutting conditions from the first cutting path to immediately before the corner section, cutting the workpiece in the corner section under the second cutting conditions smaller in cutting ability than the first cutting conditions, and cutting the workpiece under the first cutting conditions on the second cutting path after finishing the corner section, wherein at the time of switching from the first cutting conditions to the second cutting conditions and/or from the second cutting conditions to the first cutting conditions, the cutting conditions are continuously changed.

Specifically, according to the first and second aspects of the invention, the cutting conditions are changed continuously without switching instantaneously between the first and second cutting conditions. Therefore, a processing defect such as an incompleteness due to the cutting delay can be prevented. Also, in the first and second aspects, the laser processing head is continuously moved along the cutting path without being retreated and, therefore, the delay of the cutting time can be suppressed. Further, the cutting conditions are changed while reducing the cutting ability in a predetermined section on the second cutting path or a predetermined corner section, and therefore the enlargement in the cutting width or a burn-through at the corner can be prevented. The first and second cutting paths are not necessarily straight but may be curved.

According to a third aspect of the invention, there is provided a laser processing method of the first or second aspect, wherein the cutting conditions are continuously changed over a predetermined time length.

Specifically, in the third aspect, the area for changing the cutting conditions continuously can be determined with a comparatively simple configuration. Also, the cutting operation of the whole cutting path can be finished within the desired time.

According to a fourth aspect of the invention, there is provided a laser processing method in the first or second aspect, wherein the cutting conditions are changed continuously for a predetermined time length.

Specifically, in the third aspect, the area for changing the cutting conditions continuously can be determined with a comparatively simple configuration. Also, the fourth aspect is advantageously applicable in the case where the second cutting path is comparatively short.

According to a fifth aspect of the invention, there is provided a laser processing method in any of the first to fourth aspects, wherein the predetermined section is determined based on at least one of the material, thickness of the workpiece and the angle of the corner.

Specifically, in the fifth aspect, the predetermined section can be determined optimally.

According to a sixth aspect of the invention, there is provided a laser processing method in any of the first to fifth aspects, wherein the predetermined time length is configured of a plurality of minor time lengths, and the cutting conditions are changed to each of predetermined cutting conditions in each of the minor time lengths.

Specifically, in the sixth aspect, the optimum cutting conditions are varied and used for each of the plurality of the minor time lengths.

According to a seventh aspect of the invention, there is provided a laser processing method in any of the first to sixth aspects, wherein the cutting conditions include at least a selected one of the laser output, pulse duty factor, pulse frequency, assist gas pressure and the cutting speed.

Specifically, in the seventh aspect, the cutting conditions can be determined easily and optimally.

According to an eighth aspect of the invention, there is provided a laser processing method in any of the first to seventh aspects, wherein the cutting conditions are determined based on at least one of the material, thickness of the workpiece and the angle of the corner.

Specifically, in the eighth aspect, the cutting conditions can be determined more optimally.

These and other objects, features and advantages of the invention will become more apparent from the detailed description of typical embodiments of the invention shown in the accompanying drawings.

### BRIEF DESCRIPTION OF THE DRAWINGS

Fig. 1 is a schematic diagram showing a laser processing device including a laser machine according to this invention.
Fig. 2 is a flowchart showing the operation for carrying out the laser processing method of the laser machine according to this invention.
Fig. 3 is a flowchart showing the operation for carrying out the laser processing method of the laser machine according to this invention.
Fig. 4 is a diagram showing the relation between the cutting conditions and time according to an embodiment of the invention.
Fig. 5 is a diagram showing a map relating to the length of the section C2.
Fig. 6 is a diagram showing the relation between the cutting conditions and time according to another embodiment of the invention.
Fig. 7a is a schematic diagram showing an example of the cutting path including an ordinary corner.
Fig. 7b is a diagram showing another example of the cutting path including an ordinary corner.
Fig. 8a is a diagram showing the relation between the cutting conditions and the time according to the prior art.
Fig. 8b is a diagram showing the state of the workpiece section at the time of laser cutting according to the prior art.

### DETAILED DESCRIPTION

Embodiments of the invention are explained below with reference to the accompanying drawings. In the drawings described below, the similar members are designated by the similar reference numerals, respectively. To facilitate the understanding, the scale of each drawing is appropriately changed.

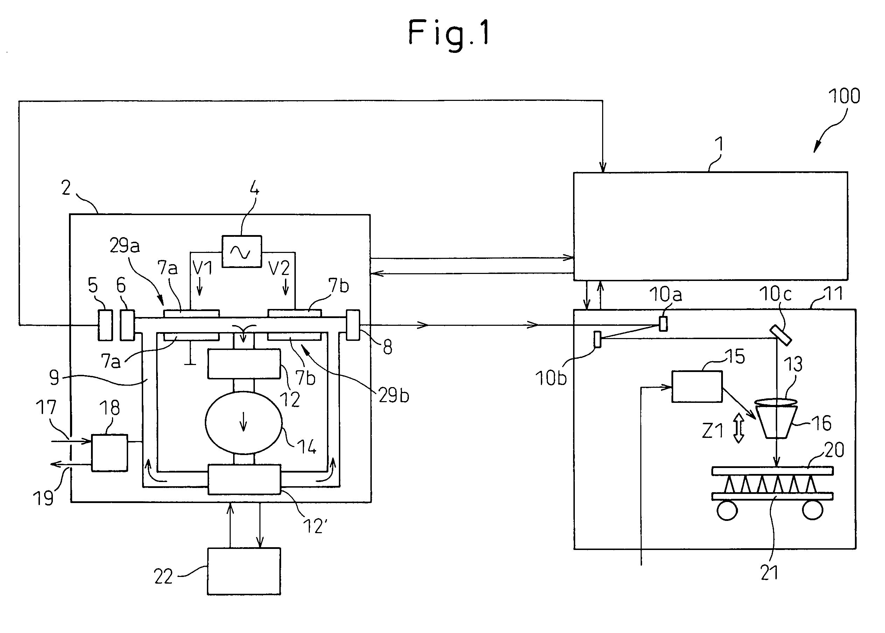

Fig. 1 is a schematic diagram showing a laser processing device including a laser machine 11 for carrying out the laser processing method according to this invention. The laser processing device 100 is used mainly for metal cutting and includes a laser oscillator 2 and a laser machine 11. As shown in Fig. 1, the laser oscillator 2 and the laser machine 11 are electrically connected to each other through a control unit 1.

The laser oscillator 2 is of discharge excitation type and has a comparatively high output or, for example, a carbon dioxide gas laser having an output of 1 kW or more. The laser oscillator 2 includes a discharge tube 9 connected to a laser gas pressure control system 18. The laser gas pressure control system 18 can supply the laser gas to the discharge tube 9 and discharge the laser gas from the discharge tube 9 through a laser gas supply port 17 and a laser gas discharge port 19, respectively, formed on the laser oscillator 2. A rear mirror (mirror in resonator) 6 having substantially no partial transmissibility is arranged at an end of the discharge tube 9, and an output mirror 8 having a partial transmissibility is arranged at the other end of the discharge tube 9. The output mirror 8 is made from ZnSe. The inner surface of the output mirror 8 is partial reflection coating, and the outer surface thereof is total reflection coating. A laser power sensor 5 is arranged behind the rear mirror 6, and the laser output detected by the laser power sensor 5 is input to the control unit 1 as shown. As shown, two discharge sections 29a, 29b are formed in the optical resonator between the rear mirror 6 and the output mirror 8.

The discharge sections 29a, 29b include discharge electrode pairs 7a, 7b, respectively, arranged in such positions as to sandwich the discharge tube 9. As shown, the discharge electrode pairs 7a, 7b are arranged in series to each other on the discharge tube 9. The discharge electrode pairs 7a, 7b have the same size and are coated with a dielectric material. As shown in Fig. 1, the discharge electrode pairs 7a, 7b are connected to a common high-frequency power supply 4 through a matching circuit (not shown). The high-frequency power supply 4 has a frequency of, say, 2 MHz and can freely control the power to be supplied to the discharge sections 29a, 29b.

Further, as shown, a blower 14 is arranged in the discharge tube 9, and heat exchangers 12, 12' are arranged upstream and downstream, respectively, of the blower 14. Further, the laser oscillator 2 is connected to a cooling water circulation system 22 thereby to appropriately cool the laser gas, etc. in the discharge tube 9.

Although the laser oscillator 2 of high-speed axial-flow type is shown in Fig. 1, other types of laser oscillators, such as an oscillator of triaxial orthogonal type or a gas slab laser cooled by thermal diffusion, can alternatively be employed with equal effect.

The laser beam output from the output mirror 8 of the laser oscillator 2 enters the laser machine 11. The laser machine 11 includes a plurality of reflectors, or in Fig. 1, three reflectors 10a, 10b, 10c for reflecting the incident laser. As shown, the laser beam reflected by the reflectors 10a, 10b, 10c is radiated on a workpiece 20 such as a steel plate on a processing table 21 through a focusing lens 13 and a laser processing head 16. The focusing lens 13 is formed of ZnSe, and the two surfaces thereof are an anti-reflection coating.

The workpiece 20 can be set in position by changing the position of the table 21 horizontally. Further, as shown in Fig. 1, the laser machine 11 includes an assist gas supply system 15. The assist gas from an assist gas source (not shown) installed outside the laser machine 11 is supplied to the desired position on the laser head 16 by an assist gas supply system 15. The pressure of the assist gas is controlled by the assist gas supply system 15 through the control unit 1.

The control unit 1 for electrically connecting the laser oscillator 2 and the laser machine 11 is configured of a digital computer including a storage unit having a ROM (read-only memory) and a RAM (random access memory), a processing unit such as a CPU (microprocessor) and an input unit as an input port and an output unit as an output port interconnected by a bidirectional bus. The input unit and the output unit are appropriately connected to predetermined component elements of the laser oscillator 2 and the laser machine 11 to control the predetermined component elements appropriately.

During the operation of the laser processing device 100, the laser gas is supplied into the discharge tube 9 through the laser gas supply port 17 by the laser gas pressure control system 18. Then, the laser gas is circulated in the circulation path including the discharge tube 9 by the blower 14. As indicated by arrow in Fig. 1, the laser gas sent from the blower 14 is supplied to the discharge sections 29a, 29b through a heat exchanger 12' for removing the compression heat.

Upon application of a predetermined voltage such as an AC voltage of several hundred kHz to several tens of MHz by the discharge electrode pairs 7a, 7b in the discharge sections 29a, 29b, the laser gas is excited by the discharging thereby to generate the laser beam. Based on a well-known principle, the laser beam is amplified in the optical resonator, and the output laser beam is retrieved through the output mirror 8. The laser gas increased in temperature by the discharging is cooled by the heat exchanger 12 and returns to the blower 14. In the process, the laser gas in the discharge tube 9 is assumed to be cooled by the operation of the cooling water circulation system 22.

The laser beam retrieved from the output mirror 8, as shown, is supplied to the laser machine 11 from the laser oscillator 2. In the laser machine 11, the laser beam is appropriately reflected by three reflectors 10a, 10b, 10c. The laser beam thus reflected is focused by the focusing lens 13 and radiated on the workpiece 20 through the laser processing head 16. As a result, the workpiece 20 on the processing table 21 can be cut, welded or otherwise processed.

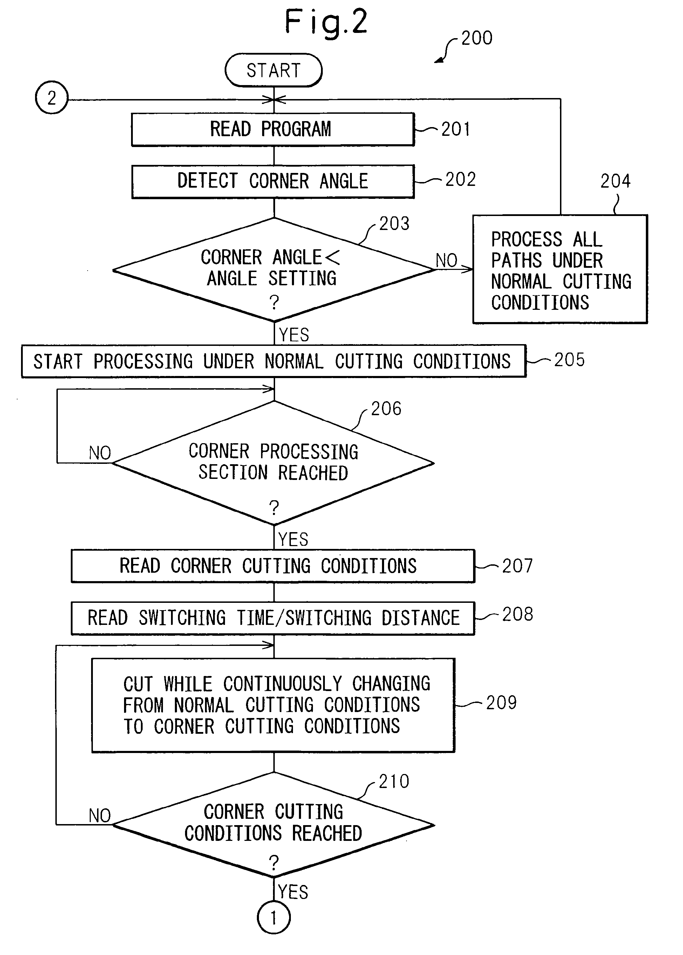

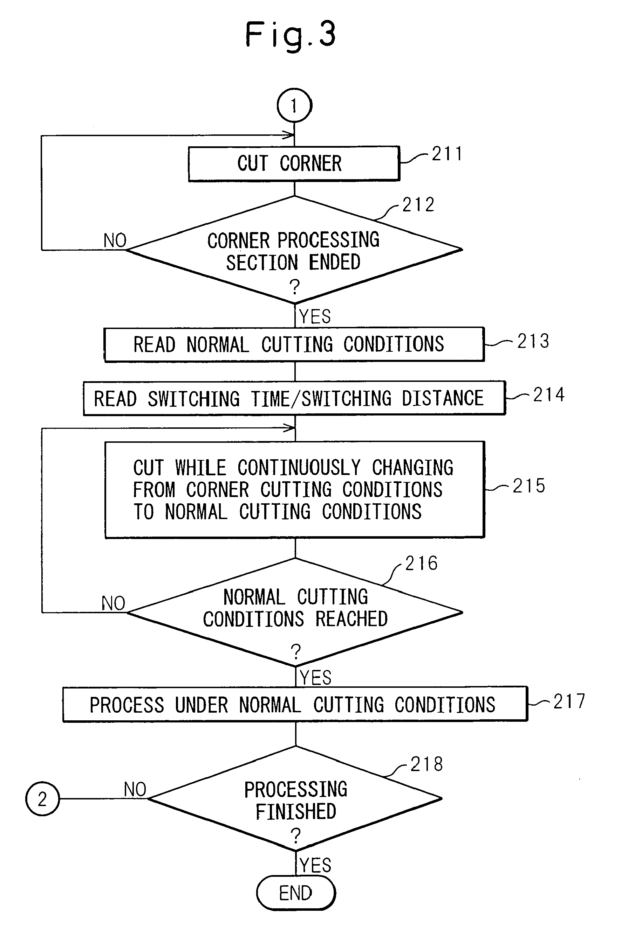

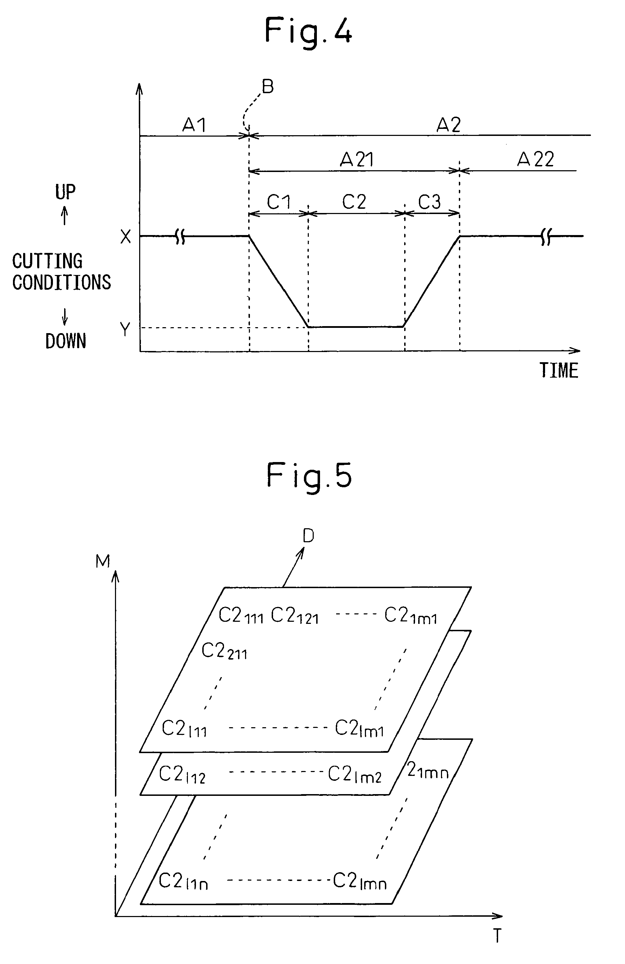

The operation performed by the laser processing method on the laser machine 11 is explained below. Figs. 2 and 3 are flowcharts showing the operation of the laser machine 11. The flowchart 200 shown in these drawings is assumed to be stored in a storage unit such as a ROM of the control unit 1. Further, Fig. 4 is a diagram showing the relation between the cutting conditions of the laser machine 11 and the time for cutting a cutting path A0 having a sharp corner B between a first cutting path A1 and a second cutting path A2. In Fig. 4, the ordinate represents the cutting conditions, and the abscissa the time. Initially, the normal cutting conditions X are assumed to be set in the laser machine 11.

In step 201 of the flowchart 200, the program used to cut the workpiece 20 is partially read. Then, the corner angle D of the corner B on the cutting path A0 described in the read program is detected (step 202).

Next, in step 203, it is determined whether the detected corner angle D is smaller than a predetermined angle setting D0 or not. The angle setting D0 is, for example, a comparatively sharp angle stored in advance in the storage unit such as a ROM of the control unit 1. In the case where the detected corner angle D is not smaller than the angle setting D0, the process proceeds to step 204 in which the whole cutting path is cut under the normal cutting conditions X.

In the case where the detected corner angle D is smaller than the angle setting D0, on the other hand, the process proceeds to step 205. In step 205, the workpiece 20 is cut along the first cutting path A1 of the cutting path A0 under the normal cutting conditions X.

The cutting operation on the first cutting path A1 is continued until, in step 206, it is determined that the laser processing head 16 has reached the corner B of the corner processing section S21. Upon determination in step 206 that the laser processing head 16 has reached the corner processing section A21, the process proceeds to step 207.

In step 207, the corner cutting conditions Y are read. The corner cutting conditions Y, under which the cutting ability thereof is smaller than that of the normal cutting conditions X, are stored in a storage unit such as a ROM.

Then, the process proceeds to step 208, in which the switching time or the switching distance for the first switching section C1 is read. As can be seen from Fig. 4, the first switching section C1 is a part of the first half of the corner processing section A21 and is located between the first cutting path A1 using the normal cutting conditions X and the section C2 using the corner cutting conditions Y.

The switching time of the first switching section C1 is the time in which the cutting conditions are continuously changed from the normal cutting conditions X to the corner cutting conditions Y. The switching distance, on the other hand, is the length of the first switching section C1 in which the laser processing head 16 moves while the cutting conditions is changed as described above. The switching time and the switching distance are stored in the storage unit such as a RAM of the control unit 1, and in step 208, either the switching time or the switching distance is read.

In step 209, with the laser processing head 16 moves along the cutting path A0, the cutting process in the first switching section C1 is performed, while the cutting conditions are continuously changed from the normal cutting conditions X to the corner cutting conditions Y. According to the embodiment shown in Fig. 4, the cutting conditions are changed linearly from the normal cutting conditions X to the corner cutting conditions Y in the first switching section C1. According to an embodiment not shown, the change of the cutting conditions in the first switching section C1 and the second switching section C3 described later may be each expressed by a secondary function or an exponential function.

As described above, according to this invention, the cutting conditions are not instantaneously changed stepwise. Instead, the first switching section C1 is newly added, and the cutting conditions are continuously changed from the normal cutting conditions X to the corner cutting conditions Y in the first switching section C1. At the time of switching the cutting conditions, therefore, a processing defect such as incompleteness due to the processing delay is not caused.

Also, according to the invention, unlike in the prior art, the laser processing head 16 is not temporary retreated, but continuously advanced along the cutting path A0 even in the first switching section C1. As compared with the prior art in which the laser processing head 16 is retreated, therefore, this invention can suppress the delay of the cutting time.

In the case where the switching time is read in step 208, the first switching section C1 is determined based on the switching time. In this case, the cutting operation of the whole cutting path A0 is advantageously finished within the desired time. In the case where the switching distance is read in step 208, on the other hand, the first switching section C1 is determined based on the switching distance. In such a case, a comparatively short second cutting path A2 is advantageous.

Then, in step 210, it is determined whether the cutting conditions have reached the corner cutting conditions Y or not, and in the case where the cutting conditions have reached the corner cutting conditions Y, the process proceeds to step 211. In the case where the cutting conditions have yet to reach the corner cutting conditions Y, on the other hand, the process returns to step 209 and the process is repeated until the cutting conditions reach the corner cutting conditions Y.

As can be seen from Fig. 4, once the cutting conditions reach the corner cutting conditions Y, the first switching section C1 is finished. Then, in step 211, the section C2 immediately following the first switching section C1 in the second cutting path A2 is cut under the corner cutting conditions Y. In this way, the cutting conditions for the section C2 are downgraded to the corner cutting conditions Y in order to prevent the heat from being excessively accumulated in the neighborhood of the corner B and hence prevent the cutting width from enlarging or the burning, through from occurring in the neighborhood of the corner B.

The cutting operation under the corner cutting conditions Y is continued until, in step 212, it is determined that the section C2 is finished. Specifically, in the case where, in step 212, it is not determined that the section C2 is finished, the process returns to step 211 and is repeated until the determination that the section C2 is finished.

The section C2 of the corner processing section A21 is of such a size (length) as not to generate an incompleteness due to the processing delay. The section C2 is determined in accordance with at least one of the material M and the thickness T of the workpiece 20 and the corner angle D detected in step 202. Fig. 5 is a diagram showing a map of the length of the section C2. As shown in Fig. 5, the section C2 is predetermined by experiments or otherwise in the form of a map as a function of the material M, the thickness T and the corner angle D. The map of the section C2 is assumed to be stored in the storage unit such as a ROM of the control unit 1. According to this invention, the section C2 can be determined optimally and easily by using this map.

Once the section C2 is finished, the second switching section C3 immediately following the section C2 is entered. Upon entry into the second switching section C3, the normal cutting conditions X are read again in step 213. Then, in step 214, the switching time or the switching distance in the second switching section C3 are read. The switching time or the switching distance in the second switching section C3 are defined similarly to the switching time and switching distance in the first switching section C1, and the same type data as in the first switching section C1 are read in the second switching section C3.

In Fig. 4, the switching time and/or the switching distance in the second switching section C3 and the switching time and/or the switching distance in the first switching section C1 are represented in the same manner as if they are identical with each other. Nevertheless, the switching time and/or the switching distance in the first switching section C1 and the second switching section C3 can be set differently from each other.

Then, in step 215, as in the first switching section C1, the cutting process in the second switching section C3 is performed while the cutting conditions are continuously changed from the corner cutting conditions Y to the normal cutting conditions X.

It is apparent that the provision of the second switching section C3 produces a similar effect to that of the first switching section C1 as described above. Specifically, even in the case where the switching conditions are switched in the second switching section C3, the processing defect based on the processing delay is not caused. According to this invention, the cutting conditions are continuously changed in both the first switching section C1 and the second switching section C3, and therefore, the workpiece 20 is prevented from developing a processing defect at the time of changing the cutting conditions over the whole cutting path A0.

Then, in step 216, it is determined whether the cutting conditions have reached the normal cutting conditions X or not, and in the case where the cutting conditions have reached the normal cutting conditions X, the process proceeds to step 217. In the case where the cutting conditions have yet to reach the normal cutting conditions X, on the other hand, the process returns to step 215 and is repeated until the cutting conditions reach the normal cutting conditions X. As can be seen from Fig. 4, once the cutting conditions reach the normal cutting conditions X, the second switching section C3 is finished, and the remaining section A22 of the second cutting path A2 is entered.

After that, the section A22 is cut under the normal cutting conditions X in step 217. Then, in the case where it is determined in step 218 that the cutting path A0 has been completely cut, the process is ended. In the case where it is determined that the cutting path A0 has yet to be cut completely, on the other hand, the process returns to step 201 and is repeated. Thus, the cutting operation is executed for other corners (not shown) on the cutting path A0. After that, the process is repeated until the cutting operation is finished at the corners on the cutting path A0.

According to this invention, the normal cutting conditions X and the corner cutting conditions Y are switched by changing at least one of the laser output, the pulse duty, the pulse frequency, the assist gas pressure and the cutting speed. Taking into consideration that the cutting ability is determined on thickness and processing speed, as a general trend, if the thickness of the workpiece is large, the laser output and/or the pulse duty factor of the laser should be increased. Also, if the processing speed is high, the laser output, the pulse duty factor of the laser and/or the pulse frequency of the laser should be increased. Further, the assist gas pressure is related to the material to be processed, and in the case where the workpiece 20 is formed of soft steel or the like, the assist gas pressure is reduced comparatively. In the case where the work 20 is formed of stainless steel, on the other hand, the cutting ability is improved by comparatively increasing the assist gas pressure. According to this invention, the optimal cutting conditions can be set easily by appropriately combining the increase/decrease of the laser output, the duty factor of the pulses, the pulse frequency, the assist gas pressure and the cutting speed or processing speed.

As described above, in the case where the thickness of the work 20 is comparatively large, a processing defect is liable to occur due to the cutting delay m, and therefore, the cutting conditions are desirably determined taking the thickness T of the workpiece 20 also into consideration. In similar fashion, it is more desirable to determine the cutting conditions taking the material M or the corner angle D of the workpiece 20 into consideration. In this case, a similar map (not shown) to that described above with reference to Fig. 5 is prepared for the laser output, the duty factor of the pulse, the pulse frequency, the assist gas pressure and the cutting speed and stored in the storage unit of the control unit 1 in advance. At the time of changing the cutting conditions, the map corresponding to at least one of the laser output, the duty factor of the pulse, the pulse frequency, the assist gas pressure and the cutting speed is used. Apparently, therefore, more optimal cutting conditions can be set.

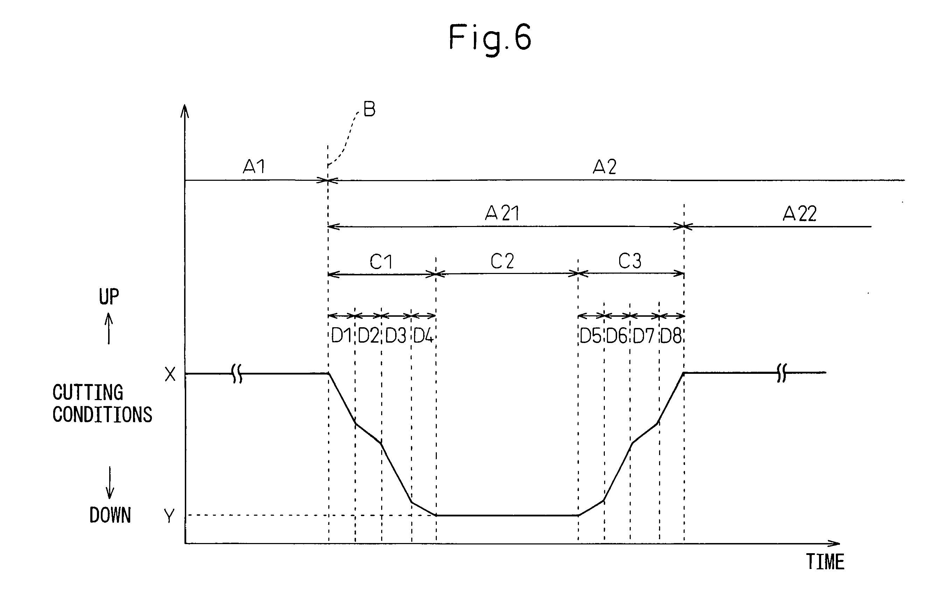

Fig. 6 is a diagram similar to Fig. 4 showing the relation between cutting conditions and time according to another embodiment. In Fig. 6, the first switching section C1 is defined into a plurality of minor sections D1 to D4. The cutting conditions corresponding to each of the minor sections D1 to D4 are determined in advance, and the cutting conditions of the minor sections D1 to D4 are downgraded progressively in that order from the normal cutting conditions X to the corner cutting conditions Y. In such a case, the optimal cutting conditions corresponding to each of the minor sections D1 to D4 of the first switching section C1 can be sequentially employed thereby to further improve the cutting operation of the workpiece 20.

In similar fashion, the second switching section C3 is defined into a plurality of minor sections D5 to D8. The cutting conditions for each of the minor sections D5 to D8 are set in advance in such a manner that the cutting conditions thereof are progressively upgraded from the corner cutting conditions Y to the normal cutting conditions X. In such a case, it is apparent that a similar effect can be also obtained.

Also, the cutting conditions can be changed to a comparatively small degree in the minor section D1 with which the change of the cutting conditions starts and in the minor section D4 in which the change of the cutting conditions ends, while the degree of change of the cutting conditions in the minor sections D2, D3 can be comparatively increased.

In the embodiments described above with reference to the drawings, the first cutting path A1 and the second cutting path A2 are shown in straight lines, and can alternatively be shown in curves. Further, as shown in Fig. 7b, the corner B can be included in the corner processing section A21 of the cutting path A0 using the laser processing method according to the invention. Even in such a case, the laser processing method according to the invention is apparently applicable. Also, any of the configurations described above can be appropriately combined without departing from the scope of the invention.

Although the invention has been described above with reference to typical embodiments, it will be understood by those skilled in the art that various other modifications, omissions and additions as well as the modifications described above can be made without departing from the scope of the invention.

## Claims

1. A laser processing method for cutting, by laser beam, a cutting path (A0) of a workpiece (20) having a corner (B) between a first cutting path (A1) and a second cutting path (A2), comprising the steps of:
cutting the workpiece (20) under the first cutting conditions (X) from the first cutting path (A1) to the corner (B);
cutting the workpiece (20) under the second cutting conditions (Y) smaller in cutting ability than the first cutting conditions (X) for a predetermined section (A21) on the second cutting path (A2) from the corner (B); and
cutting the workpiece (20) under the first cutting conditions (X) on the second cutting path (A2) after finishing the predetermined section (A21);
wherein, at the time of at least a selected one of switching from the first cutting conditions (X) to the second cutting conditions (Y) and switching from the second cutting conditions (Y) to the first cutting conditions (X), the cutting conditions are continuously changed.

2. A laser processing method for cutting a cutting path (A0) of a workpiece (20) having a corner section (A21) containing a corner (B), between a first cutting path (A1) and a second cutting path (A2), comprising the steps of:
cutting the workpiece (20) under the first cutting conditions (X) from the first cutting path (A1) to immediately before the corner section (A21);
cutting the workpiece (20) in the corner section (A21) under the second cutting conditions (Y) smaller in cutting ability than the first cutting conditions (X); and
cutting the workpiece (20) under the first cutting conditions (X) on the second cutting path (A2) after finishing the corner section (A21);
wherein, at the time of at least a selected one of switching from the first cutting conditions (X) to the second cutting conditions (Y) and switching from the second cutting conditions (Y) to the first cutting conditions (X), the cutting conditions are continuously changed.

3. The laser processing method according to claim 1 or 2,
wherein the cutting conditions are continuously changed over a predetermined time length.

4. The laser processing method according to claim 1 or 2
wherein the cutting conditions are changed continuously over a predetermined distance.

5. The laser processing method according to any one of claims 1 to 4,
wherein the predetermined section is determined based on at least one of the material, the thickness of the workpiece (20) and the angle of the corner (B).

6. The laser processing method according to any one of claims 1 to 5,
wherein the predetermined time length is configured of a plurality of minor time lengths, and the cutting conditions are changed to each of predetermined cutting conditions in each of the minor time lengths.

7. The laser processing method according to any one of claims 1 to 6,
wherein the cutting conditions include at least selected one of the laser output, the duty factor of the pulse, the pulse frequency, the assist gas pressure and the cutting speed.

8. The laser processing method according to any one of claims 1 to 7,
wherein the cutting conditions are determined based on at least one of the material, the thickness of the workpiece (20) and the angle of the corner (B).
